# EUROPEAN PATENT APPLICATION

(11) **EP 4 459 484 A1**
(43) Date of publication of application: **06.11.2024**
(21) Application number: 23171755.4
(22) Date of filing: 05.05.2023
(51) Int. Cl.: G06F 21/33, H04L 9/40, H04W 12/0431, H04W 12/069, H04W 12/08

(54) **METHOD FOR PROVISIONING DEVICE WITH CREDENTIALS**

(71) Applicant: Nagravision Sàrl, 1033 Cheseaux-sur-Lausanne (CH)
(72) Inventor: GREMAUD, Fabien, 1033 Cheseaux-sur-Lausanne (CH)
(74) Representative: Novagraaf International SA

(57) **Abstract**

The device (200) includes a device private key (K1pr) of a pair of public and private asymmetric keys (K1pub, K1pr). The method comprising the steps, performed by the device (200) of
- receiving, from a credential provider, the device credentials in encrypted form,
- internally determining information about a current configuration of the device (200);
- generating a device attestation information based on the determined information about the current configuration of the device;
- generating a decryption key (K4i) based on the device private key (K1pr) and the generated device attestation information; and
- decrypting the received device credentials in encrypted form with the decryption key to provision the device (200) with the device credentials.

## Description

### TECHNICAL FIELD

The present disclosure relates to a method of provisioning devices with security credentials.

### BACKGROUND

In cryptography, the security credentials, or credentials, are security data or assets that can be configured in a device or a server (e.g. symmetric secret key, asymmetric keys, device certificate chain, public key of a certificate authority to authenticate a server, sensitive configuration data, license data ....). The security credentials may enable to identify and authenticate a party, such as a user or a device. The credentials can be used in an authentication procedure to control access to a network, a cloud computing platform, information, or any other resources, and/or to establish a communication with another party, for example a mutually authenticated secure communication with another party or cloud system. For example, the credentials include a combination of a user identifier, such as a username, and a secret password or personal identification number (PIN), biometric data, or an API Key, or a bearer token to access resources, or an asymmetric key to sign proof-of-possession token to access specific resources, or cryptographic keys (e.g., an asymmetric key pair or a shared symmetric key) and/or passwords.

In a process of provisioning a device with security credentials, the security credentials are securely installed in the device. Usually, the security credentials are stored in a secure element, such as a chip or SoC (System-on-Chip), of the device.

Let's consider the example of a smartphone including a phone device produced by a phone device manufacturer and a SIM card provided by a telecommunication operator. The SIM card is a secure element that securely stores credentials enabling the smartphone to access a telecommunication network.

For security reasons, the devices are typically provisioned with security credentials at a secured production site of a manufacturer of the devices.

Thus, the process of provisioning a device with security credentials requires that the device should include a secure element, such as a security SoC (System-on-Chip) or chip, to store the security credentials, and that the manufacturer of the device should have a secured production site.

However, there is a need for provisioning with security credentials devices that do not have any secure element, for example IoT (Internet of Things) devices or objects, and/or are produced by device manufacturers that do not have a secured production site.

### SUMMARY

The present disclosure concerns a method, performed by a device, for provisioning said device with device credentials, said device including a device private key of a pair of public and private asymmetric keys, comprising the steps of
- receiving, from a credential provider, the device credentials in encrypted form,
- internally determining information about a current configuration of the device;
- generating a device attestation information based on the determined information about the current configuration of the device;
- generating a decryption key based on the device private key and the generated device attestation information; and
- decrypting the received device credentials in encrypted form with the decryption key to provision the device with the device credentials.

If the current or actual configuration of the device is not as expected, the decryption key is not correct and consequently the step of decrypting does not output the device credentials in clear. It may output an error or incorrect decrypted data.

In an embodiment, the step of generating a decryption key includes :
- a step of executing a key agreement protocol using a public key of a pair of public and private asymmetric keys of the credential provider and the device private key, whereby the device and the credential provider agree on key data; and
- a step of deriving the decryption key from the agreed key data, with a key derivation function using as input the generated device attestation information.

For example, the agreed key data may include a symmetric key. Then, the decryption key can be derived from this agreed key, using the generated attestation information as input.

Advantageously, the method may further comprise, after the step of decrypting, a step of securely storing the device credentials in the device. After the step of decryption, the credentials can be stored in a persistent memory, protected for example by hardware means and/or by encryption with a secret key of the device.

In an embodiment, in the step of receiving the device credentials in encrypted form, the device further receives an authentication tag, the step of decrypting includes an authentication of the received device credentials, based on the authentication tag, and
- if the authentication fails, outputting an error;
- if the authentication is successful, outputting the decrypted device credentials.

In an embodiment, the device includes a security chip storing the device private key, that performs said steps of:
- internally determining information about a current configuration of the device;
- generating a device attestation information;
- generating the decryption key; and
- decrypting the received device credentials.

The security chip or SoC may include hardware and software. The determination of information about a current, actual configuration of the device may be performed by the security chip. For that purpose, the security chip may internally determine information about a current, actual configuration of the hardware and software on the security chip.

In an embodiment, said security chip is a master chip and the device further includes one or more slave chips, and the steps of internally determining information about a current configuration of the device and generating a device attestation information include:
- a step, carried out by each one of the master chip and the one or more slave chips, of internally determining information about a current configuration of said chip,
- a step, carried out by each one of the master chip and the one or more slave chips, of generating a chip attestation information based on the determined information about the current configuration of said chip;
- a step, carried out by each slave chip, of transmitting the generated chip attestation information from said slave chip to the master chip;
- a step of computing the device attestation information based on the chip attestation information of each one of the master chip and the one or more slave chips.

In case the device includes a master chip and one or more slave chips, the device attestation information may result from the current, actual respective configurations of the master chip and slave chips. The master chip can be responsible for computing the device attestation information based on the chip attestation information received from each slave chip and the chip attestation information self-determined for the master chip.

Advantageously, the method further comprises a step of authenticating the device based on the device credentials to access a resource or to establish a connection with another party. Thus, the device can use the device credentials to access a resource (e.g., network, cloud computing platform, information, or any other resources) and/or establish a connection with another party (e.g., device, system, cloud system, ...).

The present disclosure also concerns a method, performed by a credential provider, for provisioning a plurality of devices with device credentials, comprising:
- a step of receiving a plurality of digital certificates for the plurality of devices, wherein each digital certificate includes information for identifying one device and a public key of a pair of public and private keys assigned to said device,
- a step of receiving an expected device attestation information predetermined based on a configuration profile of the plurality of devices; and
- for each device,

a step of generating an encryption key based the public key of said device and the expected device attestation information; and
a step of encrypting the device credentials of said device using the encryption key; and
a step of transmitting the device credentials in encrypted form to the corresponding device.

In an embodiment, the method further comprises a step of generating device credentials for each of the plurality of devices.

In an embodiment, the step of transmitting the device credentials in encrypted form to the corresponding device includes
- a step of transmitting the device credentials of said corresponding device, in encrypted form, to a credential management system (e.g., a credential management system of the device manufacturer);
- a step of transmitting the device credentials in encrypted form from the credential management system to said corresponding device, through a communication network, for example a local area network or a local communication channel.

The device credentials in encrypted form of a plurality of devices can be transmitted to the credential management system. The credential management system can be located in a device manufacturing factory. Thus, the transmission of the device credentials to the devices can be performed in the device manufacturing factory, during production of the devices.

In another embodiment, the step of transmitting the device credentials in encrypted form to the corresponding device includes the steps, performed by the credential provider, of:
- establishing a connection between the credential provider and said corresponding device, through a communication network;
- transmitting the device credentials in encrypted form to said corresponding device through the established connection.

The above mode of transmission of the device credentials can be performed after production of the devices, when the devices are being used in a user environment, for example when the devices are connected to a local area network such as a home network or an enterprise network.

The present disclosure also concerns:
- A device configured to execute the steps of the method previously defined;
- A credential provider configured to execute the steps of the method previously defined;
- A computer program comprising instructions which, when the program is executed by a computer, cause the computer to perform the steps of the method performed by the device;
- A computer program comprising instructions which, when the program is executed by a computer, cause the computer to perform the steps of the method performed by the credential provider.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a system for provisioning devices with security credentials, according to an embodiment.
Figure 2 shows a functional block diagram of a credential provider, according to an embodiment.
Figure 3 shows a flow chart of a preliminary phase of a method for provisioning devices with security credentials, according to an embodiment.
Figure 4 shows a flow chart of steps, performed by a credential provider, of a method for provisioning devices with security credentials, according to an embodiment.
Figures 5A, 5B schematically represent two modes of transmission of security credentials from a credential provider to devices, according to an embodiment.
Figure 6 shows a flow chart of steps, performed by a device, of a method for provisioning devices with security credentials, according to an embodiment.
Figure 7 schematically represents a device including a master chip and two slave chips, according to another embodiment.
Figure 8 shows a flow chart of steps, performed by the device of figure 7, for receiving and processing the device credentials, according to another embodiment.

### DETAILED DESCRIPTION

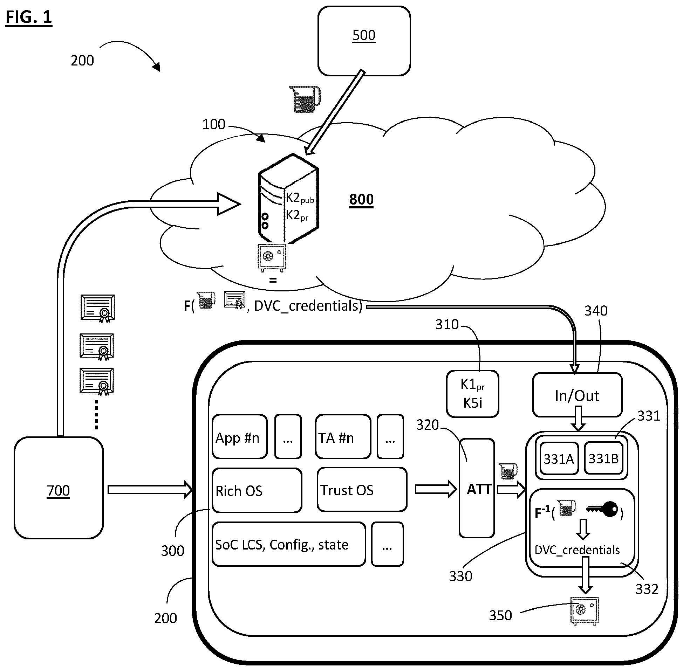

The present disclosure concerns a system for provisioning a plurality of devices or systems 200 with security credentials. The system includes a plurality of devices or systems 200 and a credential provider 100. For the sake of clarity, only one device or system 200 is represented in figure 1.

The security credentials, or credentials, of a device include any security data or asset configured in the device (e.g. symmetric secret key, asymmetric keys, device certificate chain, public key of a certificate authority to authenticate a server, sensitive configuration data, license data, ... ). It can include data enabling to identify and authenticate said device. The credentials can be used in an authentication procedure to control access, by the device, to a network, a cloud computing platform, information, or any other resources, and/or to establish a communication with another device or system. The credentials may include machine-readable cryptographic keys (e.g., an asymmetric key pair or a shared symmetric key), digital certificates and/or passwords.

In the present disclosure, the term "key" is used to designate a cryptographic or digital key, that can be for example a secret symmetric key, a public asymmetric key or a private asymmetric key.

The plurality of devices 200 are for example produced by a device manufacturer 500. The term "device" is to be broadly construed to cover any computing device, sub-system or system. For example, a device can be an IoT device, or a set of interconnected IoT devices, a machine tool, an automotive ECU, a train control unit, a subsystem in a vehicle (e.g., car, train, plane, etc.) that may include different components connected via wired or wireless communication protocols, ... In an embodiment, the devices 200 may be a series of devices manufactured in accordance with a same device template. They may be manufactured and configured to comply with a predetermined configuration profile. This configuration profile is a template configuration or a reference configuration. It can include information about hardware components and software components or applications installed in the devices 200, such as a state and/or characteristic(s).

### First Embodiment

In a first embodiment, a device 200 includes a security chip, or SoC (System-on-Chip), 300.

The security chip 300 comprises hardware components (e.g., processing core(s), memories, ports, interfaces, ...) and software components or applications. The software components may include for example:
- one or more non-secure applications "App #n",
- one or more secure or trust applications "TA #n",
- a main OS (Operating System) "Rich OS", for example Linux^{©} or FreeRTOS^{©},
- a secure OS "Trust OS" used to execute security tasks, for example OP-TEE^{©} or ARM TFM^{©}.

The security chip 300 is configured with a pair of public and private asymmetric keys K1_{pub}, K1ₚᵣ. A digital certificate, or public key certificate, proves the validity of the public key K1_{pub}. This digital certificate includes information about the public key K1_{pub}, information about the identity of its owner, and a digital signature of an entity that has verified the certificate's content. Once the security chip 300 has been installed in the device 200, the pair of public and private keys K1_{pub}, K1ₚᵣ is assigned or associated to the device 200. The information about the identity of the owner of the public key K1_{pub} may include a chip identifier that becomes a device identifier once the security chip 300 has been installed in the device 200. The private key K1ₚᵣ is stored in the security chip 300, for example in a secure persistent memory 310 of the security chip 300. Optionally, the public key K1_{pub} and its digital certificate are also stored in the security chip 300, for example in the secure memory 310.

The security chip 300 further includes an attestation module 320, a security module 330 and an input/output interface or port 340.

The input/output interface 340 is configured to transmit and receive data. In an embodiment, it may be connected to a network or communication interface (not represented) of the device 200 for connecting the device 200 to a communication network. This network can be the Internet 800 and/or a local area network. In particular, the device 200 is configured to receive security credentials in encrypted form through the input/output interface 340, as described later.

The attestation module 320 is responsible for internally determining, or self-determining, data or pieces of information that describe a current or actual configuration of the device 200, and for generating a device attestation information based on the determined data or pieces of information.

In the first embodiment, the configuration of the device 200 includes a configuration of the security chip 300, that may include a state and/or characteristics of hardware components and software components or applications of the security chip 300. In an embodiment, the attestation module 320 implements the specifications of document PSA Certified Attestation API 1.0, number ARM IHI 0085, to generate the chip attestation information. Alternatively, the attestation module 320 may use another attestation function.

The security module 330 is responsible for executing security or cryptographic tasks (e.g., encrypting, decrypting, computing a digital signature, verifying a digital signature, ....). It has access to the secure memory 310. The secure memory 310 may be included in the security module 330.

In the present disclosure, the security module 330 includes a key generator 331, and a decryption block 332.

The key generator 331 is configured to generate a decryption key based on the private key K1ₚᵣ of the device 200 and the device attestation information determined by the attestation module 320. In an embodiment, the key generator 331 includes a key agreement block 331A and a key derivation block 331B. The key agreement block 331A is configured to execute a key agreement function or protocol, whereby the device 200 and the credential provider 100 agree on key data. The key derivation block 331B is configured to derive the decryption key, by using a key derivation function, from the agreed key data and using as input the device attestation information determined by the attestation module 320.

The key agreement block 331A is optional. In another embodiment, the key derivation block 331B may be configured to derive the decryption key, by using a key derivation function, from the private key K1ₚᵣ of the device 200 and using as input the device attestation information internally determined by the attestation module 320.

The decryption block 332 is configured to decrypt the security credentials, received in encrypted form, with the decryption key generated by the key generator 331.

The credential provider 100 has the main function of encrypting security credentials for devices 200 and providing said devices 200 with the security credentials in encrypted form. It may be for example a server, a computing system, a cloud computing platform, ...

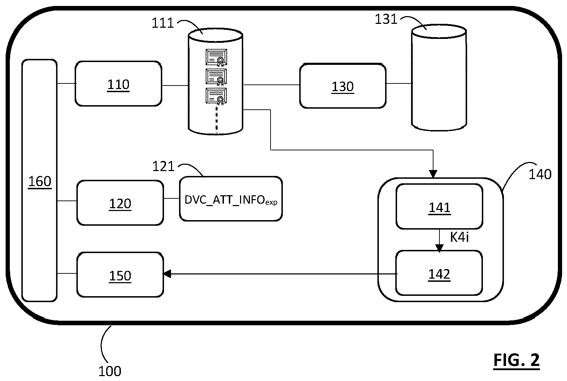

In an embodiment shown in figure 2, the credential provider 100 includes a first reception module 110 for receiving digital certificates assigned to devices 200, a second reception module 120 for receiving an expected or reference device attestation information predetermined based on an expected or reference configuration of the devices 200, a credential generator 130 for generating security credentials for the devices 200, an encryption module 140 for encrypting the generated security credentials, and a transmission module 150 for transmitting the security credentials in encrypted form to the devices 200.

The credential provider 100 may include a network interface 160 for connecting to a communication network, for example the Internet 800.

The first reception module 110 is configured to receive the digital certificates of the public keys K1_{pub} of the devices 200, more precisely the public keys K1_{pub} of the security chips 300 installed in the devices 200. In an embodiment, the digital certificates may be transmitted by a manufacturer 700 of the chips 300, through a communication network, for example the network 800. However, any other mode of transmission could be used to transmit the digital certificates to the credential provider 100.

The second reception module 120 is configured to receive an expected or reference device attestation information about the devices 200, referenced DVC_ATT_INFOₑₓₚ. In an embodiment, the expected device attestation information is predetermined, for example by the manufacturer 500 of the devices 200, based on a template configuration or reference configuration or configuration profile of the device 200. The devices 200 are manufactured and configured by the manufacturer 500 to comply with a configuration profile, that can be created for example by the manufacturer 500 of the devices 200. In an embodiment, the expected or reference device attestation information DVC_ATT_INFOₑₓₚ of the devices 200 may be transmitted by the device manufacturer 500, through a communication network, for example the network 800. However, any other transmission mode could be used. The expected or reference device attestation information about the devices 200 may be received in association with a global device identifier identifying the group or series of devices 200 manufactured and/or configured in accordance with the corresponding configuration profile.

In an embodiment, the credential provider 100 includes a first memory or database 111 for storing the received digital certificates, and a second memory 121 for storing the expected or reference device attestation information DVC_ATT_INFOₑₓₚ of the devices 200.

The credential generator 130 is configured to generate security credentials for the devices 200. In an embodiment, the credential generator 130 is configured to generate security credentials for each public key certificate received by the first reception module 110. As previously indicated, the security credentials for a device 200 may include one or more cryptographic keys (e.g., an asymmetric key pair or a symmetric key), digital certificates and/or passwords. The device 200 may further include a memory or database 131 for storing the security credentials generated for the devices 200.

The encryption module 140 has the function of encrypting the generated security credentials, the security credentials generated for a specific device being encrypted in a specific manner for this device, as explained below. It comprises a key generator 141, and an encryption block 142.

The key generator 141 is configured to generate, for each device 200, a specific encryption key based on the device public key, or the public key certificate, of said device 200 and the expected or reference device attestation information received for the plurality of devices 200. In an embodiment, the key generator 141 may include a key agreement block 141A and a key derivation block 141B. The key agreement block 141A is configured to execute a key agreement function or protocol, whereby each device 200 and the credential provider 100 agree on key data. The key derivation block 141B is configured to derive the encryption key, specific to each device 200, by executing a key derivation function, from the agreed key data and using as input the expected device attestation information for the devices 200.

The key agreement block 141A is optional. In another embodiment, the key derivation block 141B may be configured to derive the encryption key, by executing a key derivation function, from the public key K1_{pub} of the device 200 and using as input the expected or reference device attestation information.

The encryption block 142 is configured to encrypt the security credentials for each device 200 with the specific encryption key generated by the key generator 141 for said device 200.

For example, the key agreement functions or protocols used by the devices 200 and the credential provider 100 are as specified in the standard document NIST Special Publication 800-56A, Revision 3, "Recommendation for Pair-Wise Key-Establishment Schemes Using Discrete Logarithm Cryptography". Alternatively, a Quantum key agreement function could be used.

For example, the key derivation functions used by the devices 200 and the credential provider 100 are specified in the standard document NIST Special Publication 800-108r1, "Recommendation for Key Derivation Using Pseudorandom Functions". Other types of key agreement function and key derivation function could be used.

The transmission module 150 is configured to transmit the security credentials in encrypted form, provided at the output of the encryption block 142, to the corresponding devices 200. The security credentials in encrypted form can be distributed to the corresponding devices 200 either through communications between the credential provider 100 and each device 200, or via a credential management system or device 900 responsible for receiving the credentials of devices 200 and distributing them to the corresponding devices 200, as described later.

In an embodiment, the credential provider 100 is provisioned with a pair of public and private keys K2_{pub}, K2ₚᵣᵢᵥ. A digital or public key certificate proves the validity of the public key K2_{pub}. The devices 200i have access and/or store the digital certificate of the public key K2_{pub}.

A method for provisioning the plurality of devices 200 with device credentials will now be described according to a first embodiment. For clarity reason, the devices will be referenced "200i" with 1 ≤ *i* ≤ *N*, where i represents an index identifying a specific device among N devices.

The method includes a process for generating device credentials and transmitting said device credentials to a device 200i, performed by the credential provider 100, and a process for receiving and processing the device credentials, performed by said device 200i, according to the first embodiment.

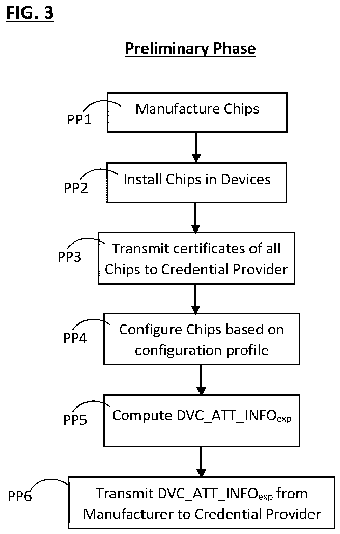

In a preliminary phase PP, illustrated in figure 3, the devices 200i with 1 ≤ *i* ≤ *N* are manufactured and configured. The preliminary phase PP may include the preliminary steps described below.

In a step PP_1, the chips or SoCs 300i with 1 ≤ *i* ≤ *N* are manufactured in a secured chip production site. During the manufacture of the chips 300i, each chip 300i is provisioned with a specific pair of public and private keys K1_{pub,i}, K1_{pr,i}. A public key certificate or digital certificate is generated for said pair of public and private keys K1_{pub,i}, K1_{pr,i}, for example by a certificate authority (not represented). In other words, a pair of public and private keys K1_{pub,i}, K1_{pr,i} is specifically assigned to the chip 300i. The private key K1_{pr,i}, and optionally the K1_{pub,i} and/or its certificate, are stored in the secure memory 310i of the chip 300i.

In a step PP_2, the chips 300i are installed in the devices 200i, during the manufacture of the devices 200i. In the present embodiment, one chip 300i is installed in each device 200i.

In a step PP_3, the digital certificates or public key certificates of the plurality of devices 200i with 1 ≤ *i* ≤ *N* are transmitted by an entity of the chip manufacturer 700 to the credential provider 100, for example through the network 800. For example, a bundle of certificates including the certificates of all the devices 200i with 1 ≤ *i* ≤ *N* is transmitted to the credential provider 100 through the communication network 800. However, the certificates could be transmitted by any other means to the credential provider 100.

In a step PP_4, during the manufacture of the devices 200i, the chips 300i may be configured to comply with a predetermined configuration profile (or reference configuration). The configuration of the chip 300i may be done partially at the production site of the chips 300i and partially at a manufacturing factory of the device manufacturer 500. In the present embodiment, this configuration profile of the chip 300i can be considered as a configuration profile for the device 200i.

In a step PP_5, an entity of the device manufacturer 500 determines or computes an expected or reference device attestation information, referred as DVC_ATT_INFOₑₓₚ based on the configuration profile of the device 200i. For that purpose, this entity of the device manufacturer 500 may use an attestation function as specified in the document PSA Certified Attestation API 1.0, number ARM IHI 0085. The expected or reference device attestation information DVC_ATT_INFOₑₓₚ may be a tag, for example formatted in accordance with PSA Certified Attestation API, Document number ARM IHI 0085, or with IETF Entity Attestation Token (EAT), Workgroup RATS, draft-ietf-rats-eat-19, published on 19 December 2022.

In a step PP_6, the device manufacturer 500 transmits the expected or reference device attestation information DVC_ATT_INFOₑₓₚ, to the credential provider 100. This expected or reference device attestation information DVC_ATT_INFOₑₓₚ is valid for all the devices 200i with 1 ≤ *i* ≤ *N* including a chip 300i configured in accordance with the predetermined configuration profile or reference configuration.

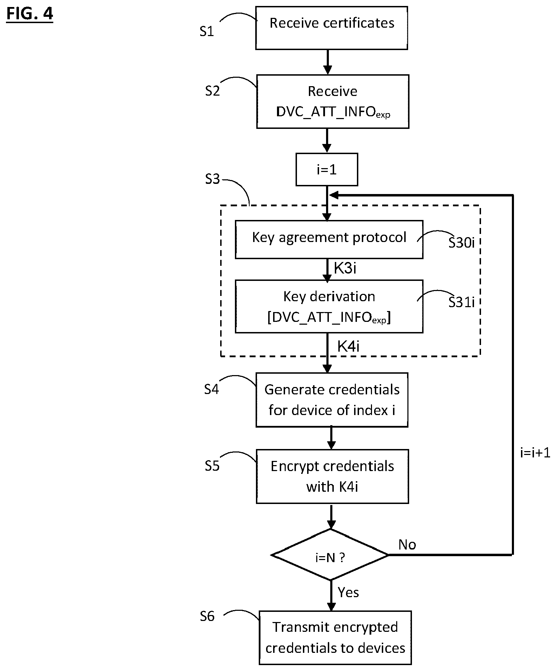

The process for generating and transmitting device credentials, performed by the credential provider 100, will now be described, according to an embodiment, with reference to figure 4.

In a step S1, the credential provider 100 receives the bundle of public key certificates or digital certificates of the devices 200i with 1 ≤ *i* ≤ *N* from the chip manufacturer 700. Each digital certificate includes information for identifying one specific device 200i including the chip 300i, for example a chip or device identifier, and a device public key of a pair of public and private keys K1_{pub,i}, K1_{pr,i} assigned to said chip 300i or device 200i.

In a step S2, the credential provider 100 receives the expected or reference attestation information for the devices 200i with 1 ≤ *i* ≤ *N* from the device manufacturer 500.

Then, the credential provider 100 executes the steps S3 to S5 for each device 200i with 1 ≤ *i* ≤ *N.*

In the step S3, the credential provider 100 generates an encryption key K4ᵢ, specific to the device 200i, based on the device public key K1_{pub,i} of said device 200i, received in the step S1, and the expected or reference device attestation information DVC_ATT_INFOₑₓₚ received in the step S2. Optionally, the credential provider 100 may verify the digital certificate of the device 200i before executing the step S3. If the certificate is valid, the encryption key K4ᵢ is generated. If the digital certificate is not valid, the encryption key K4ᵢ is not generated and an error is generated.

In an embodiment, the step S3 of generating the encryption key K4i includes a first step of key agreement S30i and a second step of key derivation S31i.

In the step S30i of key agreement, the credential provider 100 determines key data which the credential provider 100 and the device 200i agree on. In an embodiment, the credential provider generates a key K3i, specifically for the device 200i, by using a key agreement function, and taking as input or based on the public key K1_{pub,i} of the device 200i and the private key K2ₚᵣ of the credential provider 100. For example, the key agreement function is as specified in the standard NIST Special Publication 800-56A, Revision 3, "Recommendation for Pair-Wise Key-Establishment Schemes Using Discrete Logarithm Cryptography". Alternatively, the key agreement function may be the Diffie-Hellman key agreement function.

In the present embodiment, the agreed key K3i is a symmetric key.

Alternatively, the agreed key data may include a pair or public and private asymmetric keys and a public key certificate.

In the step S31i of key derivation, the credential provider 100 derives a specific encryption key K4i from the agreed key data, here K3i, using a key derivation function that takes as input the expected device attestation information DVC_ATT_INFOₑₓₚ. For example, the key derivation function is defined in the standard NIST Special Publication 800-108r1, "Recommendation for Key Derivation Using Pseudorandom Functions". However, any other key derivation function could be used. In the present embodiment, the key K4i is a symmetric key.

In a step S4, the credential generator 130 generates credentials or security credentials, referred as "device credentials", specifically for the device 200i. For example, the credential provider 100 generates device credentials for each certificate received in the step S1 and/or stored. The generated credentials are associated with said digital certificate.

In a step S5, the encryption module 140 encrypts the device credentials generated for the device 200i with the corresponding encryption key K4i generated for this device 200i.

Optionally, an authenticated encryption algorithm is used for the encryption, in the step S5, which simultaneously assure the confidentiality and authenticity of data (here, the device credentials). The authenticated encryption may be for example an authenticated encryption with associated data (AEAD), such as an AES CCM mode encryption, or may use an Encrypt-then-MAC (EtM) approach for example using AES (Advanced Encryption Standard) and HMAC (Hash-based message authentication code). This type of encryption allows to provide both authentication and confidentiality of the device credentials. In that case, the encryption module 142 may output the device credentials in encrypted form and an authentication tag. For example, if the Encrypt-then-MAC (EtM) approach is used, the authentication tag can be a HMAC of the encrypted device credentials. The keys needed for the authenticated encryption may be generated for example based on the key K4i. The encryption itself may be done by another key generated for example based on the key K4i.

The steps S3 to S5 are carried out for each device 300i with 1 ≤ *i* ≤ *N.*

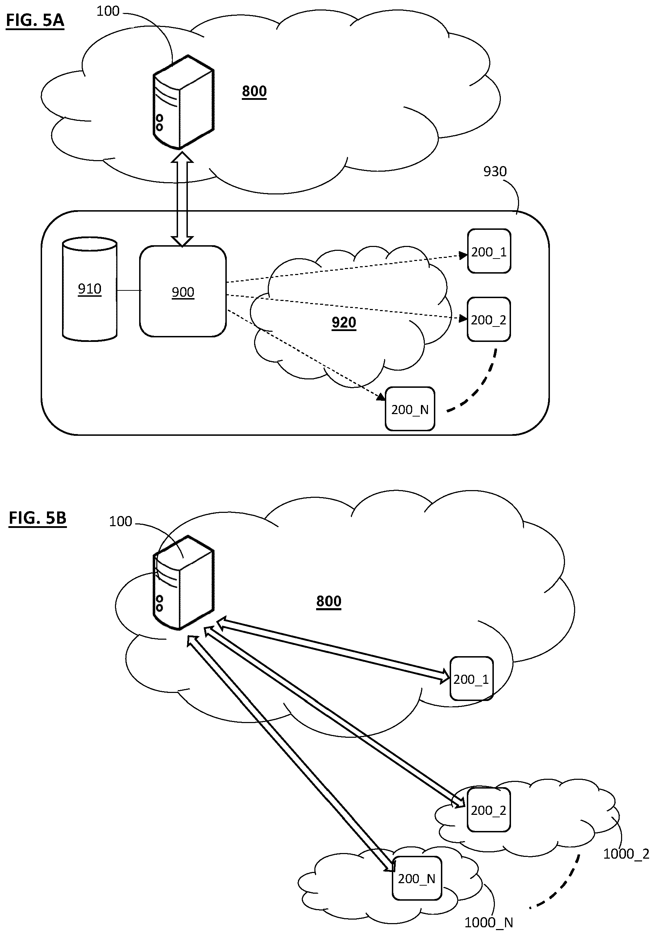

In a step S6, the credential provider 100 transmits the device credentials in encrypted form to the corresponding devices 200i. The transmission of the device credentials in encrypted form from the credential provider 100 to the devices 200i can be carried out according to different modes, as illustrated in figure 5A and 5B.

A first mode of transmission can be advantageously used while the devices 200i are at a device manufacturing factory 930. This device manufacturing factory 930 may include a credential management system 900. The credential management system or device 900 could be a server, a mobile phone, or any other communication system or device.

According to the first mode of transmission, represented in figure 5A, the credential provider 100 transmits for example a bundle of device credentials, including the credentials in encrypted form of a plurality of devices, preferably the credentials of all devices 200i with 1 ≤ *i* ≤ *N*, to the credential management system 900, through the network 800 or by any other transmission means. In an embodiment, the transmission of the bundle of certificates can be executed upon request of the credential management system 900. Then, the credential management system 900 transmits or distributes the device credentials in encrypted form to the corresponding devices 200i, for example through a local area network or through a local or air-gap (proximity) communication channel 920, via a communication between the credential management system 900 and each device 200i. This transmission between the credential management system 900 and each device 200i can be advantageously performed while manufacturing the device 200i at the device manufacturing factory 930. As the credential management system 900 is located in a device manufacturing factory 930, this mode of transmission avoids any connection through an external communication network, while manufacturing the devices, and thus avoids an undesired stoppage of device production if the external network is temporarily unavailable, for example due to a breakdown.

A second mode of transmission can be used after production, when the devices 200i are being used. For example, the device 200i can be connected to and/or integrated in a local area network 1000_i, or be directly connected to the network 800 (e.g., the device 200_1 in figure 5B), as shown in figure 5B. The local area network can be a home network or an enterprise network. It may be connected to the network 800. In the second mode of transmission, represented in figure 5B, the credential provider 100 establishes a communication with each device 200i, through the network 800, identifies the device 200i, and transmits the device credentials, in encrypted form, of the device 200i to the device 200i through the established communication. Optionally, a secure connection can be established between the device 200i and the credential provider 100 to increase the security with an encrypted communication. This communication may be established upon request of the device 200i, for example when the device 200i is initiated or starts being used in field (i.e., in a user environment), typically by a final user or customer, and connected to the network 800. After integration in the local area network, the device 200i is started and, during the startup procedure, it may request the establishment of a communication with the credential provider 100 through the network 800 to obtain its security credentials.

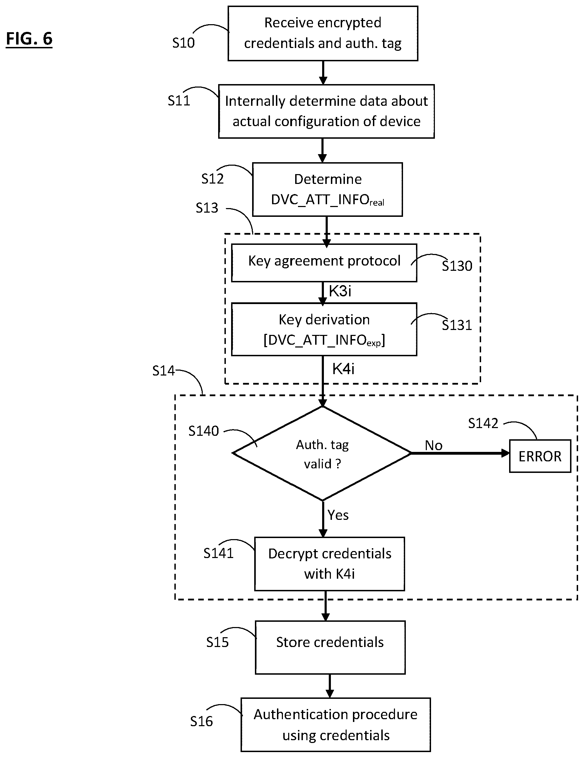

The process for receiving and processing the device credentials, performed by each device 200i, according to an embodiment, will now be described, with reference to figure 6.

In a first step S10, the device 200i receives its security credentials, or device credentials, in encrypted form from the credential provider 100. In case that an authenticated encryption has been used to encrypt the device credentials, an authentication tag is also received in the step S10.

In an embodiment, the device credentials in encrypted form can be received directly from the credential provider 100, after establishment of a communication between the credential provider 100 and the device 200i. Optionally, the device 200i and the credential provider 100 perform a mutual authentication, using for example their respective key pairs, before establishing the communication.

In another embodiment, the device credentials in encrypted form are received from the credential provider 100, via the credential management system 900, preferably through a local area network or local communication channel between the device 200i and the credential management system 900. If the credential management system 900 is located at the manufacturing factory of the device 200i, the step S10 of receiving the device credentials in encrypted form can be performed at the manufacturing factory during the manufacture of the device 200i.

In a step S11, the device 200i internally determines information about its current, actual, real configuration. The determination of information about the actual configuration of the device 200i is a self-determination, performed by the device 200i itself. For that purpose, in the first embodiment, the attestation module 320 of the chip 300i internally determines, collects data or pieces of information about an actual, current configuration of the chip 300i. For example, the data may include measurements of different software components, done by a secure boot during an initialization stage or done when requested, a life cycle state of the chip or SoC, "SoC LCS", (e.g., assembly test, provisioning, field_secured, field_return_analysis), configuration information about one or more hardware components of the chip or SoC (e.g., a state of a JTAG port and/or another hardware interface indicating whether it is closed (or locked), open (or unlocked) or protected, the indication whether a secure boot is activated or not, etc.), or any specific and application specific states of the device such as physical localization area provided by a GPS, a specific device data, consolidated data result of dynamic security measurements like heap usage, stack usage, runtime timing, ...

Thus, in the step S11, the attestation module 320 may determine a structure of data including data describing a current or actual configuration of the hardware and software of the chip 300i. The expected or reference attestation information has been generated by the device manufacturer 500 based on the same type of structure of data. In other words, the data self-determined by the attestation module 320 of the chip 300i and the data used by the device manufacturer 500 to generate the expected or reference attestation information DVC_ATT_INFOₑₓₚ are the same types of data, or based on the same structure of data.

In a step S12, the attestation module 320 generates a current or actual or real device attestation information DVC_ATT_INFOᵣₑₐₗ, based on the data or pieces of information determined in the step S11, for example using PSA Certified Attestation API 1.0, document number ARM IHI 0085.

In a step S13, the key generator 331 generates a decryption key, based on the device private key K1ₚᵣ and the device attestation information DVC_ATT_INFOᵣₑₐₗ internally determined by the attestation module 320. In the present embodiment, the decryption key is a symmetric key that should be identical to the encryption key K4i.

In an embodiment, the step S13 includes a key agreement step S130, wherein the key agreement block 331A executes a key agreement function or protocol to determine the key K3i which the credential provider 100 and the device 200i agree on. More precisely, the device 200i generates the key K3i by using the key agreement function, and taking as input (or based on) the public key K2_{pub} of the credential provider 100 and the private key K1_{pr,i} of the device 200i. The key agreement function used by the chip 300i is advantageously the same as the one used by the credential provider 100.

Then, in a step S131, the device 200i derives the decryption key, by executing a key derivation function, from the agreed key K3i and using as input the device attestation information DVC_ATT_INFOᵣₑₐₗ determined by the attestation module 320 in the step S12. The key derivation function used by the device 200i may be the same as the one used by the credential provider 100.

The key agreement step S130 is optional. In another embodiment, the key derivation block 331B may be configured to derive the decryption key, by executing a key derivation function, directly from the private key K1_{pr,i} of the device 200i and using as input the device attestation information DVC_ATT_INFOᵣₑₐₗ determined by the attestation module 320 in the step S12.

Then, the process comprises a decryption step S14, performed by the decryption module 332, of decrypting the device credentials, received in encrypted form, with the decryption key K4i.

In case an authenticated encryption has been used to encrypt the device credentials, the decryption module 332 may check the validity of the authentication tag, in a step S140. For that purpose, the decryption module 332 may use the encryption/decryption key K4i, used by the credential provider 100 to generate the authentication tag.

If the authentication tag is valid, the decryption module 332 decrypts the received device credentials with the key K4i and outputs the decrypted device credentials, in a step S141.

If the authentication tag is not valid, the decryption fails and the decryption module 332 may output an error, in a step S142.

Anyway, if the actual configuration of the device 200i, self-determined by the device 200i, does not match the expected or reference configuration, or configuration profile, of the device 200i, predetermined by the device manufacturer 500 for example, the decryption key determined in the step S13 is not correct and consequently the decryption step S14 fails to decrypt the device credentials.

After decrypting the device credentials, the process proceeds with a step S15 of securely storing the device credentials in the device 200i. In an embodiment, the device credentials are stored in a secure storage system or a secure memory 350 of the chip 300i, typically a persistent memory, for example a memory 350 or the memory 310. This secure memory storing the provisioned device credentials may be isolated by a specific hardware and/or by a specific encryption. The device credentials may be re-encrypted with a secret key K5i of the device 200i, for example stored in the memory 310, to be stored in the memory 350. The secure memory 350 may be only accessible by a module or application or software configured to use the device credentials later (e.g., an authentication application and/or a network control access application).

Once the decryption and storage of the device credentials in the security chip 300i have been carried out, the device 200i is provisioned with the device credentials.

Once the device 200i is provisioned with the device credentials, it can use the device credentials for example in an authentication procedure S16 to control access to a network, a cloud computing platform, information, a web site or any other resources, and/or to establish a communication with another party, device or system, as well known by the person skilled in the art.

The key agreement steps, performed by the credential provider 100 and the device 200i, are optional. Alternatively, the encryption key can be derived by the credential provider 100 from the public key K1_{pub,i} of the device 200i and the private key K2ₚᵣ of the credential provider 100, and the decryption key can be derived by the device 200i, or chip 300i, from the private key K1_{pr,i} of the device 200i and the public key K2_{pub} of the credential provider 100. In that case, the encryption key and the decryption key may also be a same secret symmetric key.

### Second Embodiment

A second embodiment is based on the first embodiment and only differs from it by the aspects described below.

In the second embodiment, the devices 200 include one master security chip 300, and one or more slave chips 400_a, 400_b, ... The master security chip 300 is similar to the security chip 300 (or 300i) of the first embodiment. Each slave chip 400_a, 400_b, ... is provided with an attestation module 410_a, 410_b, ...

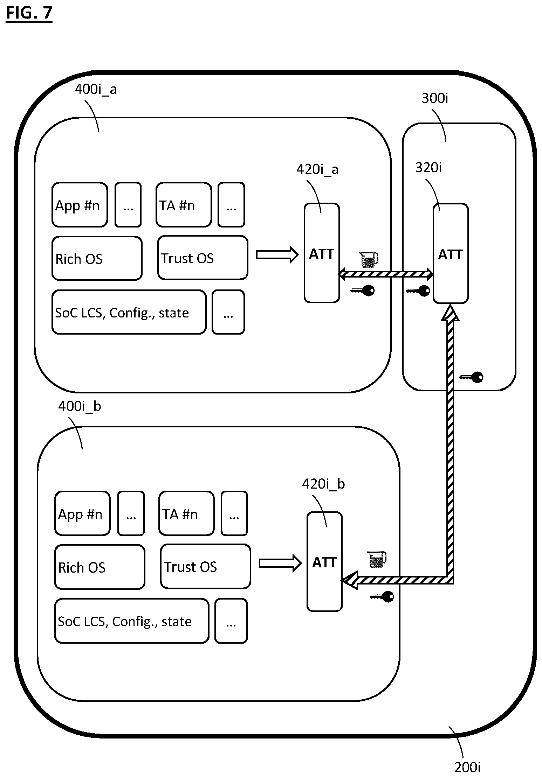

Figure 7 represents an illustrative example of a device 200i that includes a master chip 300i and two slave chips 400i_a and 400i_b. For clarity reason, the master chip 300i is schematically represented in a simplified manner.

Each of the one or more slave chips 400i_a, 400i_b, ... may include hardware and software components (e.g., applications, trust applications, main OS, secure OS, etc.). The attestation module 420i_a, 420i_b, ... of the slave chip 400_a, 400_b, ... is similar to the attestation module 320i of the master security chip 300i. It is configured to internally determine data or pieces of information that describe a current, or actual, configuration of hardware components and/or software components or applications of the corresponding slave chip 400i_a, 400i_b, ..., and to generate a chip or SoC attestation information SoC_ATT_INFO_a, SoC_ATT_INFO_b, ... for said slave chip 400i_a, 400i_b, ...based on the self-determined data or pieces of information.

Each slave chip 400i_a, 400i_b, ... is connected to the master security chip 300 through a secure communication channel. For example, each slave chip 400i_a, 400i_b, ... shares a secret key with the master security chip 300i, used to encrypt data exchanged between the master security chip 300i and the slave chip 400i_a, 400i_b, ....

Alternatively, the security of the communication channel between each slave chip and the master chip can be based on a public key infrastructure (PKI). For example, each one of the slave chips and the master chip may have a pair of public and private keys, and a public key certificate.

In an embodiment, each of the slave chips 400i_a, 400i_b, ... is paired to the master chip 300i, advantageously at device production. A pair of public and private asymmetric keys may be assigned to each slave chip 400i_a, 400i_b, .... A pairing procedure between a slave chip 400i_a, 400i_b, ... and the master chip 300i may include an authentication of the slave chip 400i_a, 400i_b, ... by the master chip 300i using the public key certificate of the slave chip. Once authenticated, the slave chips 400i_a, 400i_b, ... are "sealed" to the master chip 300i, which avoids replacement by another chip. After the pairing procedure, a shared secret key may be negotiated between each slave chip 400i_a, 400i_b, ... and the master chip 300i, which allows to speed-up the boot time.

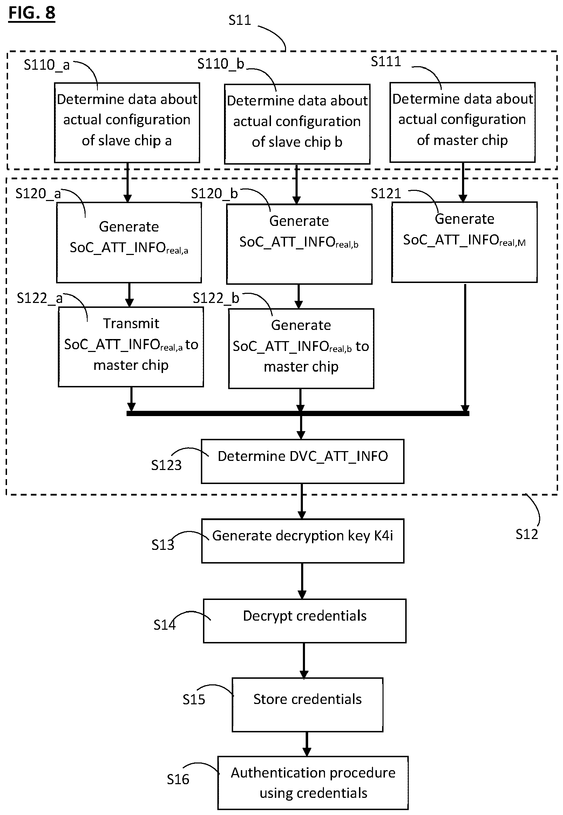

The method for provisioning the plurality of devices 200i with devices credentials according to the second embodiment will now be described with reference to figure 8. The method includes a process for generating and transmitting the device credentials, performed by the credential provider 100, and a process for receiving and processing the device credentials, performed by each device 200, according to a second embodiment.

The process for generating and transmitting the device credentials is similar to the first embodiment, except that the expected or reference device attestation information DVC_ATT_INFOₑₓₚ is generated, for example by the manufacturer 500 of the devices 200i, based on a configuration profile (or reference configuration) of the master security chip 300i and configuration profiles of the slave chips 400i_a, 400i_b, ... For example, a chip attestation information is generated for each of the master security chip 300i and slave chips 400i_a, 400i_b, ..., and the device manufacturer concatenates the chip attestation information of the different chips 300i, 400i_a, 400i_b, ... to determine the expected or reference attestation information DVC_ATT_INFOₑₓₚ of the device 200i.

The process for receiving and processing the device credentials, performed by each device 200i according to the second embodiment is based on the first embodiment and essentially differs from the first embodiment by the steps S11 and S12, represented in figure 8.

In the second embodiment, the step S11 of internally or self-determining information about an actual, current configuration of the device 300i includes the steps S110_a, S110_b, .... and S111 described below.

The step S110_a, S110_b, ....is carried out by the attestation module 320i_a, 320i_b, ... of each slave chip 400i_a, 300i_b, .... In this step S110_a, S110_b, ...., the attestation module 320i_a, 320i_b, ... of each slave chip 400i_a, 400i_b, ... internally determines data or pieces of information about a current or actual configuration of said slave chip 400i_a, 300i_b, ..... The figure 8 represents the steps S110_a and S110_b respectively carried out by the slave chips 400i_a, 400i_b, ...

In the step S111, the attestation module 320i of the master chip 300i also internally determines data or pieces of information about a current or actual configuration of said master chip 300i.

Furthermore, in the second embodiment, the step S12 of generating a current or actual or real device attestation information DVC_ATT_INFOᵣₑₐₗ of the device 200i includes the steps S120_a, S120_b, ... , S121, S122_a, S122_b, ..., S123 described below.

The step S120_a, S120_b, ... are respectively performed by the slave chips 400i_a, 300i_b, .... In the step S120_a, S120_b, ..., the attestation module 320i_a, 320i_b, ... of each slave chip (or SoC) 400i_a, 400i_b, ... generates a current or actual or real device attestation information SoC_ATT_INFO_{real,a}, SoC_ATT_INFO_{real,b}, ..., based on the data self-determined in the step S110_a, S110_b, ..., for example using PSA Certified Attestation API 1.0, document number ARM IHI 0085.

In the step S121, the attestation module 320 of the master chip (or SoC) 300i generates a current chip attestation information SoC_ATT_INFO_{real,M} based on the data self-determined in the step S111, for example using PSA Certified Attestation API 1.0, document number ARM IHI 0085.

In the step S122_a, S122_b, ..., each slave chip 400i_a, 400i_b, ... transmits its current chip or SoC attestation information SoC_ATT_INFO_{real,a}, SoC_ATT_INFO_{real,b}, ... to the master chip 300i, through the communication channel between the slave chip 400i_a, 400i_b, ... and the master chip 300i.

Then, in the step S123, the attestation module 320i of the master chip 300i determines or computes an actual or real or current device attestation information DVC_ATT_INFOᵣₑₐₗ, based on the current or actual chip or SoC attestation information SoC_ATT_INFO_{real,a}, SoC_ATT_INFO_{real,b}, ... of each slave chip 400i_a, 400i_b, ..., and the current or actual chip or SoC attestation information SoC_ATT_INFO_{real,M} of the master chip 300i. For example, the attestation module 320i of the master chip 300i may concatenate the current or actual chip or SoC attestation information SoC_ATT_INFO_{real,a}, SoC_ATT_INFO_{real,b}, ... of the different slave chips 400i_a, 400i_b, ..., and the current or actual chip or SoC attestation information SoC_ATT_INFO_{real,M} of the master chip 300i to compute the actual or real device attestation information DVC_ATT_INFOᵣₑₐₗ. However, any other function could be used to generate the actual, real device attestation information based on the actual, real attestation information from each of the slave chips and master chip.

After determination of the device attestation information DVC_ATT_INFOᵣₑₐₗ, the process for receiving and processing the device credentials proceeds with the steps S13 to S16, as described in the first embodiment.

### Variant

A variant is based on the second embodiment, and only differs from the second embodiment by the aspects described below.

According to the variant, the reference 200 represents a system including a plurality of modules or subsystems interconnected for example with local network protocols. Master chips could be provided in different modules or subsystems of the system. Each module may include a master security chip and one or more slave chips. Furthermore, depending on the configuration of the system, a module may include one or more chips and potentially one or more other modules including master chips.

In that case, the user credentials are provisioned in the multiple master chips independently from each-other.

The present disclosure also concerns:
- a computer program comprising instructions which, when the program is executed by a computer, cause the computer to perform the steps of the process, previously described, for generating and transmitting device credentials, as performed by the credential provider, and
- a computer program comprising instructions which, when the program is executed by a computer, cause the computer to perform the steps of the process, previously described, for receiving and processing the device credentials, as performed by a device 200i.

### FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

## Claims

1. A method, performed by a device (200), for provisioning said device (200) with device credentials, said device (200) including a device private key (K1ₚᵣ) of a pair of public and private asymmetric keys (K1_{pub}, K1ₚᵣ), comprising the steps of
- receiving (S10), from a credential provider (100), the device credentials in encrypted form,
- internally determining (S11) information about a current configuration of the device (200);
- generating (S12) a device attestation information (DVC_ATT_INFOᵣₑₐₗ) based on the determined information about the current configuration of the device;
- generating (S13) a decryption key (K4i) based on the device private key (K1ₚᵣ) and the generated device attestation information; and
- decrypting (S14) the received device credentials in encrypted form with the decryption key (K4i), to provision the device (200) with the device credentials.

2. The method according to claim 1, wherein the step (S13) of generating a decryption key (K4i) includes :
- a step (S130) of executing a key agreement protocol using a public key (K2_{pub}) of a pair of public and private asymmetric keys of the credential provider (100) and the device private key (K1ₚᵣ), whereby the device and the credential provider agree on key data (K3i); and
- a step (S131) of deriving the decryption key (K4i) from the agreed key data (K3i), with a key derivation function using as input the generated device attestation information (DVC_ATT_INFOᵣₑₐₗ).

3. The method according to claim 1 or 2, further comprising, after the step of decrypting (S14), a step (S15) of securely storing the device credentials in the device (200).

4. The method according to any of claims 1 to 3, wherein in the step (S10) of receiving the device credentials in encrypted form, the device (200) further receives an authentication tag, the step of decrypting (S14) includes an authentication (S140) of the received device credentials, based on the authentication tag, and
- if the authentication fails, outputting (S142) an error;
- if the authentication is successful, outputting (S141) the decrypted device credentials.

5. The method according to any of claims 1 to 4, wherein, the device (200) includes a security chip (300) storing the device private key (K1ₚᵣ), that performs said steps of:
- internally determining (S11) information about a current configuration of the device (200);
- generating (S12) a device attestation information (DVC_ATT_INFOᵣₑₐₗ);
- generating (S13) the decryption key; and
- decrypting (S14) the received device credentials.

6. The method according to claim 5, wherein said security chip (300) is a master chip and the device further includes one or more slave chips (400_a, 400_b, ...), and the steps of internally determining (S11) information about a current configuration of the device (200) and generating (S12) a device attestation information (DVC_ATT_INFOᵣₑₐₗ) include
- a step, carried out by each one of the master chip (300) and the one or more slave chips (400_a, 400_b, ...), of internally determining (S110_a, S110_b, ....,
S111) information about a current configuration of said chip,
- a step, carried out by each one of the master chip (300) and the one or more slave chips (400_a, 400_b, ...), of generating (S12) a chip attestation information (SoC_ATT_INFO_{real,a}, SoC_ATT_INFO_{real,b}, ..., SOC_ATT_INFO_{real,M}) based on the determined information about the current configuration of said chip;
- a step, carried out by each slave chip (400_a, 400_b, ...), of transmitting the generated chip attestation information (SOC_ATT_INFO_{real,a}, SoC_ATT_INFO_{real,b}, ...) from said slave chip (400_a, 400_b, ...) to the master chip (300);
- a step (S123) of computing the device attestation information (DVC_ATT_INFOᵣₑₐₗ) based on the chip attestation information of each one of the master chip and the one or more slave chips (SOC_ATT_INFO_{real,a}, SoC_ATT_INFO_{real,b}, ..., SoC_ATT_INFO_{real,M}).

7. The method according to any of claims 1 to 6, further comprising a step (S16) of authenticating the device (300) based on the device credentials to access a resource or to establish a connection with another party.

8. A method, performed by a credential provider (100), for provisioning a plurality of devices (200i) with device credentials, comprising:
- a step (S1) of receiving a plurality of digital certificates for the plurality of devices (200i), wherein each digital certificate includes information for identifying one device (200i) and a public key of a pair of public and private keys (K1_{pub,i}, K1_{pr,i}) assigned to said device (200i),
- a step (S2) of receiving an expected device attestation information predetermined based on a configuration profile of the plurality of devices (200i); and
- for each device (200i),
a step (S3) of generating an encryption key (K4i) based the public key (K1_{pub,i}) of said device (200i) and the expected device attestation information (DVC_ATT_INFOₑₓₚ); and
a step (S5) of encrypting the device credentials of said device (200i) using the encryption key (K4i); and
a step (S6) of transmitting the device credentials in encrypted form to the corresponding device (200i).

9. The method according to claim 8, further comprising a step of generating device credentials for each of the plurality of devices (200i).

10. The method according to claim 8 or 9, wherein the step (S6) of transmitting the device credentials in encrypted form to the corresponding device includes
- a step of transmitting the device credentials of said corresponding device, in encrypted form, to a credential management system (900);
- a step of transmitting the device credentials in encrypted form from the credential management system (900) to said corresponding device, through a local area network or local communication channel (920).

11. The method according to claim 8 or 9, wherein the step (S6) of transmitting the device credentials in encrypted form to the corresponding device (200i) includes the steps, performed by the credential provider (100), of:
- establishing a connection between the credential provider (100) and said corresponding device (200i), through a communication network (800);
- transmitting the device credentials in encrypted form to said corresponding device through the established connection.

12. A device configured to execute the steps of the method according to any of claims 1 to 7.

13. A credential provider configured to execute the steps of the method according to any of claims 8 to 11.

14. A computer program comprising instructions which, when the program is executed by a computer, cause the computer to perform the steps of the method according to any of claims 1 to 7.

15. A computer program comprising instructions which, when the program is executed by a computer, cause the computer to perform the steps of the method according to any of claims 8 to 11.
